# EUROPEAN PATENT SPECIFICATION

(11) **EP 4 242 028 B1**
(45) Date of publication and mention of the grant of the patent: **24.12.2025**
(21) Application number: 21888733.9
(22) Date of filing: 29.10.2021
(51) Int. Cl.: B60K 1/00, B60K 11/06, B60K 17/04, B62K 13/00

(54) **TWO-WHEEL VEHICLE OR KIT FOR CONVERTING PETROL-ENGINE MOTORBIKES INTO ELECTRIC-ENGINE MOTORBIKES**
ZWEIRADFAHRZEUG ODER KIT ZUR UMWANDLUNG VON BENZINMOTORMOTORRÄDERN IN ELEKTROMOTORRÄDER
VÉHICULES À DEUX ROUES OU KIT DE CONVERSION DE MOTOCYCLETTE À MOTEUR À ESSENCE EN MOTOCYCLETTE À MOTEUR ÉLECTRIQUE

(30) Priority: 05.11.2020 ES 202032381 U
(43) Date of publication of application: 13.09.2023
(73) Proprietor: Sanchez Nuñez, Luis Miguel, 11560 Trebujena (Cadiz) (ES)
(72) Inventor: Sanchez Nuñez, Luis Miguel, 11560 Trebujena (Cadiz) (ES)
(74) Representative: Herrero & Asociados, S.L.
(86) International application number: PCT/ES2021/070783
(87) International publication number: WO 2022/096766

(56) References cited:
- WO-A1-2011/016609
- WO-A1-2020/183492
- WO-A1-2021/205467
- ES-U- 1 264 235
- IT-A1- 201800 010 046
- IT-A1- FI20 110 054
- US-A1- 2008 308 328
- US-A1- 2019 054 815
- US-B1- 9 308 810
- US-B1- 9 308 810

## Description

A device for converting a two- or three-wheeled vehicle with a petrol engine to an electric motor, and a vehicle incorporating such a conversion device.

### OBJECT OF THE INVENTION

The present invention belongs to the automotive sector and the assembly of electric propulsion assemblies, and more specifically to the adaptation and use of a two or three-wheeled combustion vehicle to transform it into an electric vehicle.

The main object of the present invention is a device for converting a two-wheeled or three-wheeled motorcycle/scooter/moped (hereinafter motorbike) whose original engine and swingarm consists of a petrol engine into an electric engine and swingarm, replacing components of the combustion motorbike so that the external appearance is as faithful as possible to the original concept, saving costs in both development and manufacture by using various components compatible with the petrol model. In addition, improvements are added for the cooling of the electric motor, motor controller and battery.

### BACKGROUND TO THE INVENTION

Today, electric motorbikes are widely known, conceptualised from their inception with an electric motor and the arrangement of electrical elements such as the motor, controllers and batteries located in the motorbike chassis from their conception at the design stage.

Other manufacturers have opted to take advantage of architectures from motorbikes with petrol engines to make electric vehicles. The present invention falls into the latter group, taking advantage of the design of an existing petrol motorbike, eliminating the elements related to the vehicle's combustion system and, using reverse engineering techniques, integrating the necessary components to convert it into an electric vehicle.

Several patent documents are cited below, relating to electric motorbikes, which differ from each other mainly in the type of assembly of the electrical components. However, these electric motorbikes are not focused on the use and conversion of an original petrol engine motorbike, as proposed in the present invention. Examples of such prior art documents are: ES2566751T3: "Two-wheeled electric vehicle"; ES2517290T3: "Engine generator and electric motor vehicle"; ES2559352T3: "Tilting arm device for two or three-wheeled electric vehicle"; ES2397656T3 - "Straddle type vehicle".

An example of the prior art that discloses a conversion kit is WO 2020/183492 A1.

### DESCRIPTION OF THE INVENTION

The present invention provides a device for converting a two or three-wheeled vehicle with a petrol engine to an electric motor by adapting, using and/or replacing components of the original combustion motorbike, maintaining as far as possible its original external appearance, while at the same time achieving cost savings in both development and manufacture, due to the use of components compatible with the petrol model. In addition, as will be explained below, the present invention adds several improvements for the cooling of the electric motor, the motor controller and the energy storage system or battery.

In fact, the device of the invention tries to convert a motorbike with a petrol engine to an electric motor, making the most of the components and morphology of the chassis, engine and swingarm, as well as housing the batteries in the available spaces, making the most of the space available to achieve the greatest autonomy while respecting the external design of the motorbike.

Firstly, we will deal with the engine and swingarm, for which everything related to the combustion engine of the motorbike model that has traditionally been a combustion engine is eliminated. In other words, the cylinder, cylinder head, piston, crankshaft, fuel tank, carburettor, magnetic plate, fuel tank, etc. will be eliminated.

At this point there are two different alternatives for the invention depending on the type of transmission to be implemented, as the original motorbike model has a manual gearbox.

If it is desired to keep the gearbox, the clutch, primary shaft, pinions, and secondary shafts for the gearbox shall be retained. The outer casing may be kept original or redesigned to be able to screw the electric motor in the area where the magnetic plate is located, making the shaft of the electric motor coincide with the shaft of the crankshaft redesigned as it does not need a connecting rod.

In the case of dispensing with the gearbox and making an electric motorbike with belt drive, the clutch, the primary shaft, the sprockets, the secondary shafts for the gearbox, as well as the outer casing of the motorbike shall be removed. The inner casing may be kept original or redesigned and simplified.

To complete the assembly of the engine and swingarm, the new components are arranged on the frame, the electric motor may be located in the area where the magnetic plate was, making the electric motor shaft coincide with the crankshaft shaft that has been removed, the electric motor shaft will include a toothed pulley or pinion constituting the primary shaft. A new secondary shaft is provided to coincide with the wheel shaft, which houses another toothed pulley or pinion. The transmission is completed by a belt or chain with a tensioner. The secondary shaft in turn passes through two bearings which support it. One of the bearings is fixed to the inner casing and the other bearing is fixed to the outer casing. The assembly is closed with the outer casing which will evoke the design of the original casing. The end of the secondary shaft protruding from the outer casing is attached to the wheel by means of a spline or groove and a nut to the wheel brake drum.

For greater durability, less maintenance and lower manufacturing costs, instead of a manual gearbox or a belt drive, a transmission system comprising a gearbox with three shafts, the first shaft comprising a primary gearbox connected to the electric motor can be used. The second shaft comprises a shaft which can rotate because it is connected by bearings to the outer casing and the inner casing and is connected to a double gear. The double gear is able to reduce the rotational speed of the primary gear and this in turn transmits it to the intermediate shaft. The third shaft consists of a final gear which is connected to the secondary shaft. The secondary shaft is able to rotate because it is connected by bearings and/or bearings to the outer casing and the inner casing and is connected to the rear wheel, the wheel being cantilevered. The final gear is capable of reducing the rotational speed of the double gear and is in turn connected to the axle and the rear wheel.

Secondly, the battery is integrated into one of the available spaces in the motorbike chassis. The battery can be housed in the central recess by removing the fuel tank, in the left hand hull where the spare wheel is stored or in other available recesses such as the area above and below the central chassis area. The batteries can be shaped to best suit the battery compartment or even evoke the original shapes of the spare wheel or exhaust system to achieve a faithful image of the original design.

Thirdly, there is the engine controller, which, being a small device, can be placed anywhere on the motorbike.

In addition, the present invention aims to promote cooling by means of a cooling propeller attached to the shaft of the electric motor. The electric motor will be covered by a volute-shaped (or spiral) casing that will allow air to flow inside it generated by the propeller and cool the motor. Two pipes lead the air from the volute casing to the energy storage system and the motor controller, which is located inside a protected casing on the underside of the motorbike where the exhaust system was previously located, and thus with the flow of air generated by the movement of the running engine will cool both systems. In addition, the protective casing has a triple function, on the one hand to cool the engine controller as mentioned above, on the other hand to protect it from external agents and finally to act as a Faraday Cage so that it does not emit electromagnetic fields that affect other electronic devices.

Thus the conversion device described herein comprises: an electric motor; a motor controller; an energy storage system capable of supplying electricity to the electric motor, and with a size and dimensions adapted to one or more recesses of the original vehicle fairing; and a transmission system, which conducts the power to the rear wheel of the vehicle. Furthermore, as already advanced above, the conversion device additionally comprises:
- a propeller for cooling the electric motor;
- a first spiral-shaped casing covering the electric motor and having an external opening for the suction of external air as well as the air flow generated by the rotation of the propeller around the electric motor cooling it;
- a first pipe and a second pipe, arranged one after the other, for conducting air from the first spiral casing to the energy storage system and the motor controller for cooling;
- a second housing, which connects to the second pipe, where the second housing encloses and shields the engine controller, preventing electromagnetic disturbances generated by the engine controller and where the air generated by the propeller rotation passes through the second pipe and is expelled through the second housing.

Finally, it is envisaged that the motorbike can have a digital display with speedometer, odometer, voltmeter, ammeter, as well as an error testing mode. Preferably, the display is connected to the battery and the engine controller.

The systems described above may be connected by electrical wiring, but may also be wireless or Bluetooth in the case of the digital display. The motorbike may also have a Bluetooth connection to the smartphone and a computer connection port for customising the parameters of the engine's electronic system.

In accordance with another object of the invention, a vehicle comprising the conversion device described in previous paragraphs is described.

### DESCRIPTION OF THE DRAWINGS

In order to complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:
Figure 1.- Shows a right side view of a motorbike including the conversion device of the present invention.
Figure 2.- Shows a rear view of a motorbike including the conversion device of the present invention.
Figures 3 and 4 show a left side view of a motorbike showing the battery for powering the electric motor of the conversion device of the invention, the battery being located in the left hull of the motorbike.
Figures 5 to 13 show a left side view of a motorbike with other possible shapes and battery locations.
Figure 14.- Shows a right side view of the conversion device of the invention with belt drive, according to a preferred embodiment.
Figure 15.- Shows a rear view of the conversion device of figure 14.

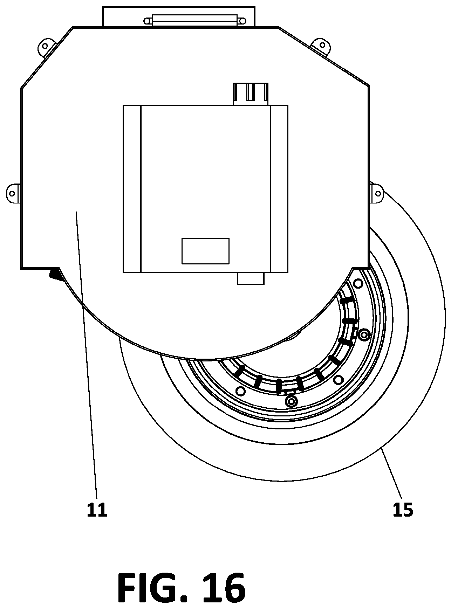

Figure 16.- Shows a detail view of the rear left side area of the motorbike where the battery is located, as in figure 3, but without the motorbike chassis surround.

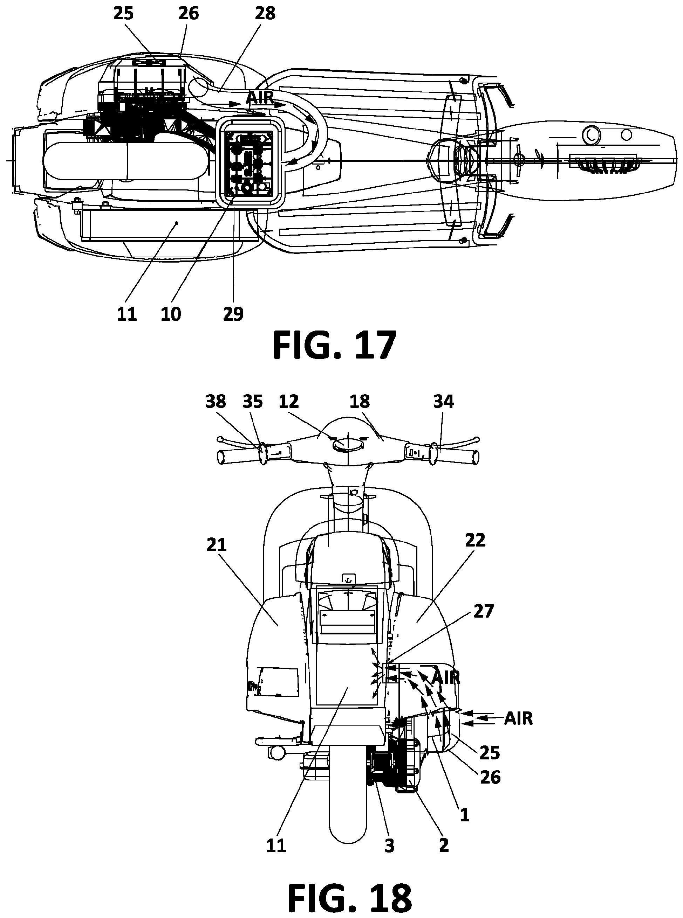

Figures 17 and 18.- Show a bottom and rear view respectively of the conversion device of the invention.
Figures 19A and 19B.- Show respectively a right side view of the conversion device of the invention, with gear transmission, according to another preferred embodiment, and section A-A of figure 19A.

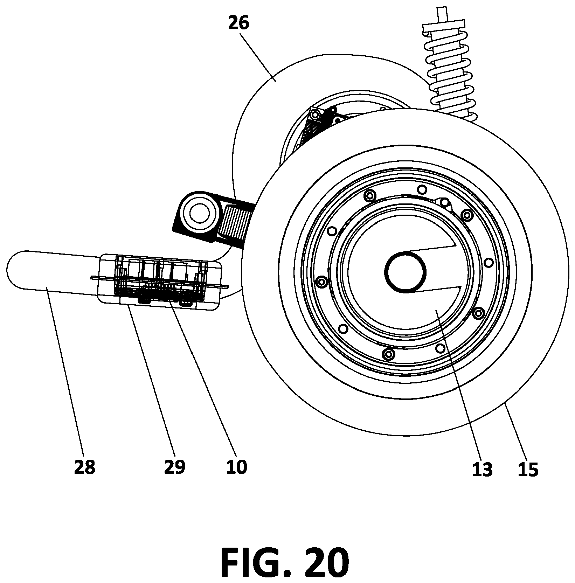

Figure 20.- Shows a left side view of the conversion device of the invention, showing the protective casing that serves as an air duct for the cooling system to cool the electric motor controller.
Figures 21A to 24.- Show views of the conversion device of the invention with manual gear transmission, according to another preferred embodiment, where figure 21B shows section B-B of Figure 21A.
Figure 25.- Shows a rear perspective view of a motorbike including the conversion device of the invention, showing the energy storage system with a wheeled cover and folding handle in the recess where the fuel tank of the original motorbike was located.

The following is a list of the various elements depicted in the figures comprising the invention:
(1) Electric motor
(2) Outer carter
(3) Inner carter
(4) Primary pulley/primary sprocket/primary gearing
(5) Secondary pulley
(6) Strap
(7) Secondary shaft
(8) Bearing
(9) Security ring
(10) Engine controller
(11) Energy storage system
(12) Odometer.
(13) Rear wheel hub
(14) Nut
(15) Rear wheel
(16) Front wheel
(17) Chassis
(18) Handlebars
(19) Seat
(20) Storage recess
(21) Left-hand hull
(22) Right-hand hull
(23) Rear shock absorber
(24) Front shock absorber
(25) A propeller
(26) Volute casing
(27) Pipeline
(28) Pipeline
(29) Housing
(30) Intermediate shaft
(31) Double gear
(32) Final gear
(33) Bearing
(34) Fist throttle device
(35) Power selector device on the cuff
(36) Electronic potentiometer
(37) Electronic switch
(38) Gear selector device on the cuff
(39) Clutch
(40) Fixed four-gear crown wheel
(41) Axis of change
(42) First gear gear
(43) Second gear gear
(44) Third gear gear
(45) Crosshead
(46) Plunger
(47) Electromechanical clutch device
(48) Electromechanical gear change device

### PREFERRED EMBODIMENT OF THE INVENTION

An example of a preferred embodiment is described below, with reference to the above figures, without limiting or reducing the scope of protection of the present invention.

As already indicated, starting from the original design of a motorbike with a combustion engine, everything related to the combustion engine is eliminated from the motorbike model that has traditionally been a combustion engine. In other words, the cylinder, cylinder head, piston, crankshaft, carburettor, magnetic plate, fuel tank, etc. are eliminated. The description of the invention continues by defining the new groups that are added to the conversion from motorbike to electric, the object of the invention.

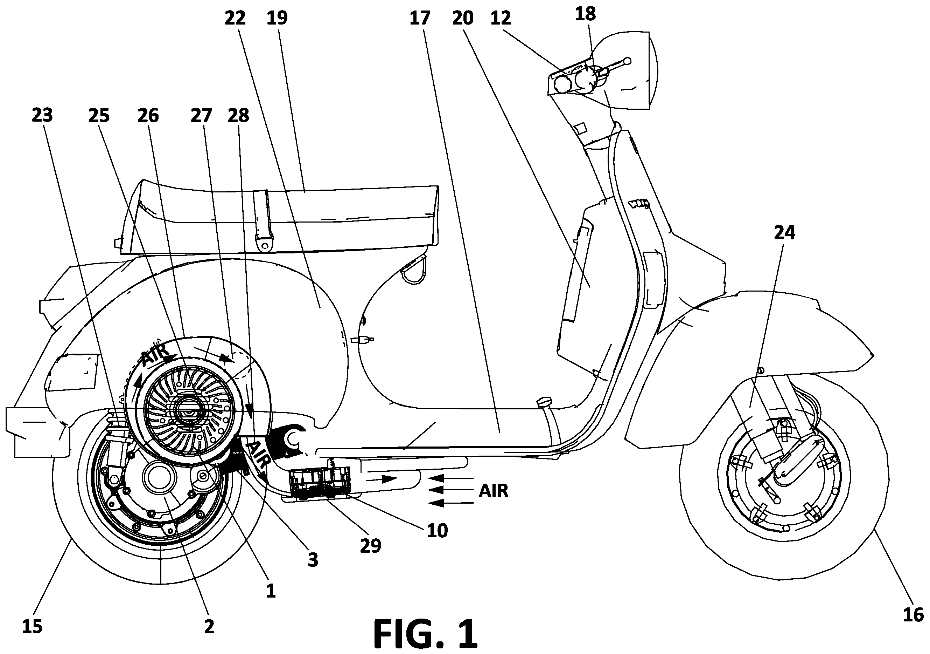

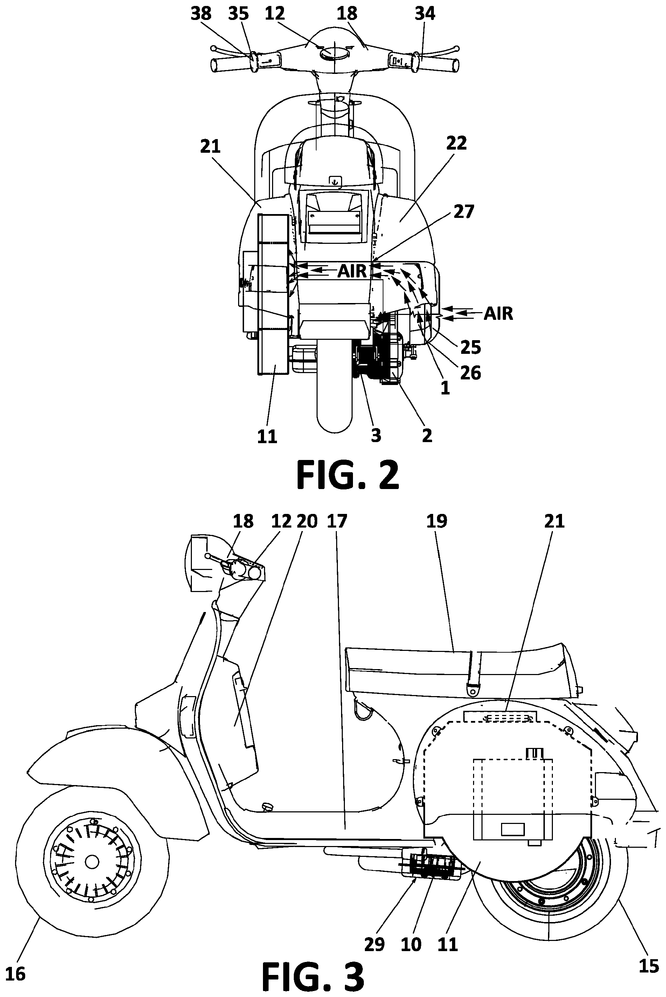

The device for converting a motorbike from a petrol engine to an electric motor, in a preferred embodiment, comprises a first group called the engine and swingarm, as can be seen in figures 1, 2, 12 to 14. The new engine and swingarm on the outside, see figures 1 and 2, contains the electric motor (1), the outer casing (2) and the inner casing (3).

At this point, there are three different alternatives for the invention depending on the type of transmission to be implemented, as the original motorbike model has a manual gearbox.

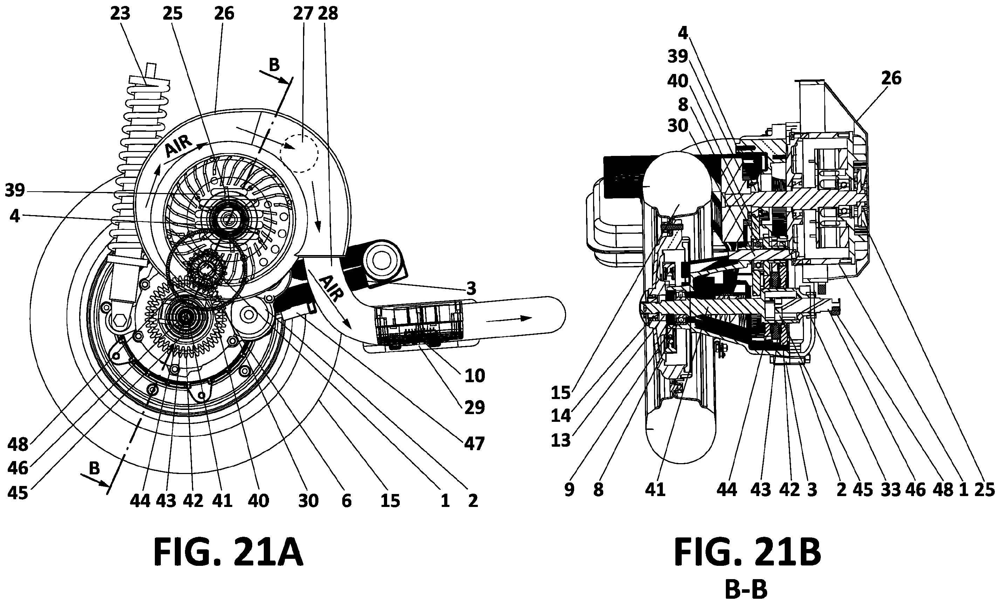

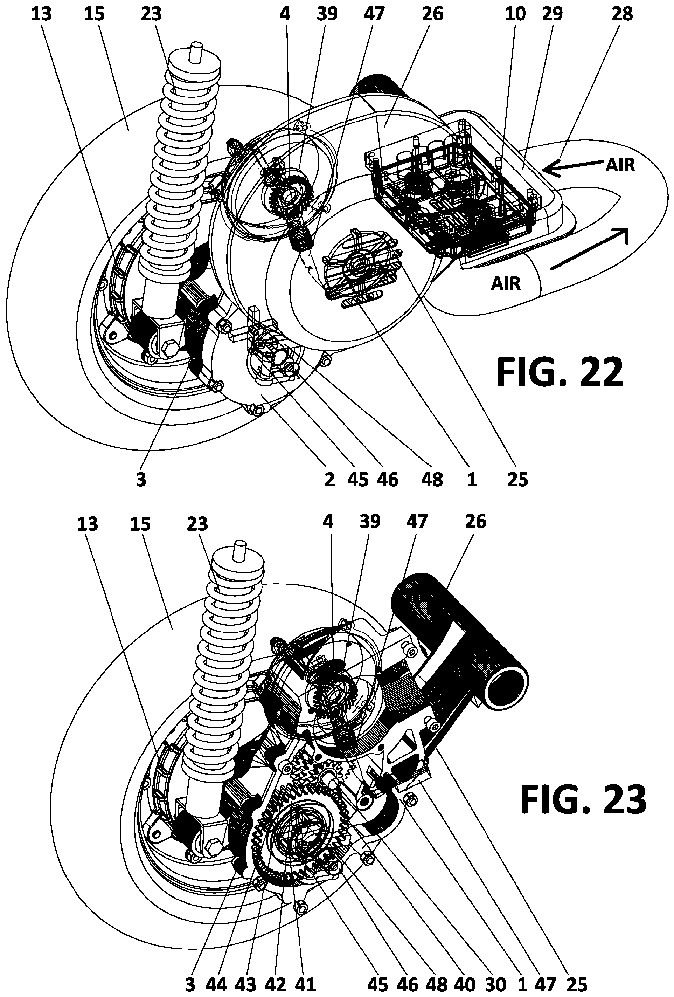

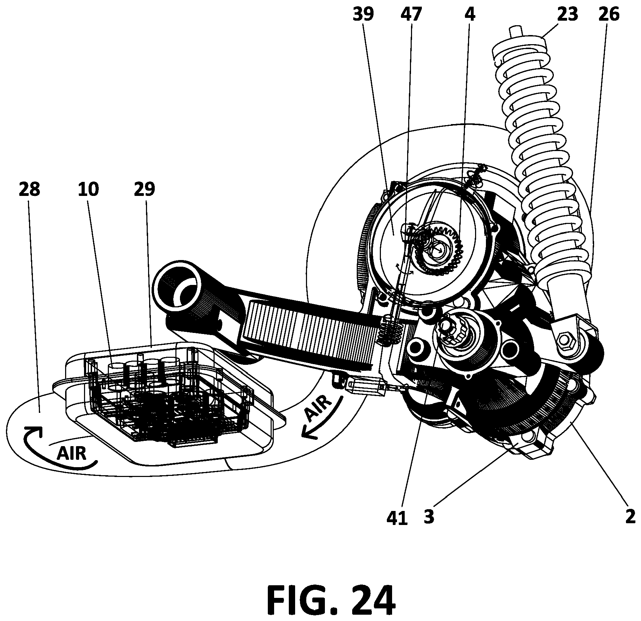

According to a first preferred embodiment, shown in figures 21 to 24, if one chooses to keep the manual gearbox of the original motorbike, the electric motor (1) will be aligned with the crankshaft shaft by joining the primary gearbox (4), where the primary gearbox is composed of three shafts:
The first shaft comprises a clutch (39) connected to the primary gear (4) and to the electric motor (1), connected by its shaft, and an electromechanical clutch device (47) connected to the clutch (39) and capable of displacing the clutch mechanism to bring the primary gear (4) together with the clutch (39) and the shaft of the electric motor (1).

The second shaft comprises an intermediate shaft (30) connected to the outer casing (2) and the inner casing (3), and a ring gear of four fixed gears (40) which can rotate because it is connected by bearings to the intermediate shaft (30). The largest of the four fixed gear rims (40) has a damping mechanism, and is in contact with the primary gear (4) and is capable of reducing the rotational speed of the primary gear (4) by contacting its gear teeth.

The third shaft comprises a first gear (42), a second gear (43), a third gear (44), a gear shaft (41) which can rotate freely relative to the gears (42, 43, 44), a spider (45) attached to the gear shaft (41), a plunger (46) attached to the spider (45), and an electromechanical gear change device attached to the plunger (46), capable of moving the plunger (46) and the crosshead (45) to coincide with one of the three gears, linking the first gear (42) or the second gear (43) or the third gear (44) to the gear shaft (41).

The gear shaft (41) is able to rotate by being connected by bearings (8) and/or bearing (33) to the outer casing (2) and inner casing (3) and is connected to the rear wheel (15) with the wheel (15) being cantilevered. The first gear (42), second gear (43) and third gear (44) are capable of reducing the rotational speed of the four fixed gear rim (40) by their gear teeth being in contact with each other.

The crosshead (45) is capable of moving and linking the gear shaft (41) with the first gear (42), the second gear (43) and the third gear (44) independently by means of a crosshead-shaped opening at their geometric centres.

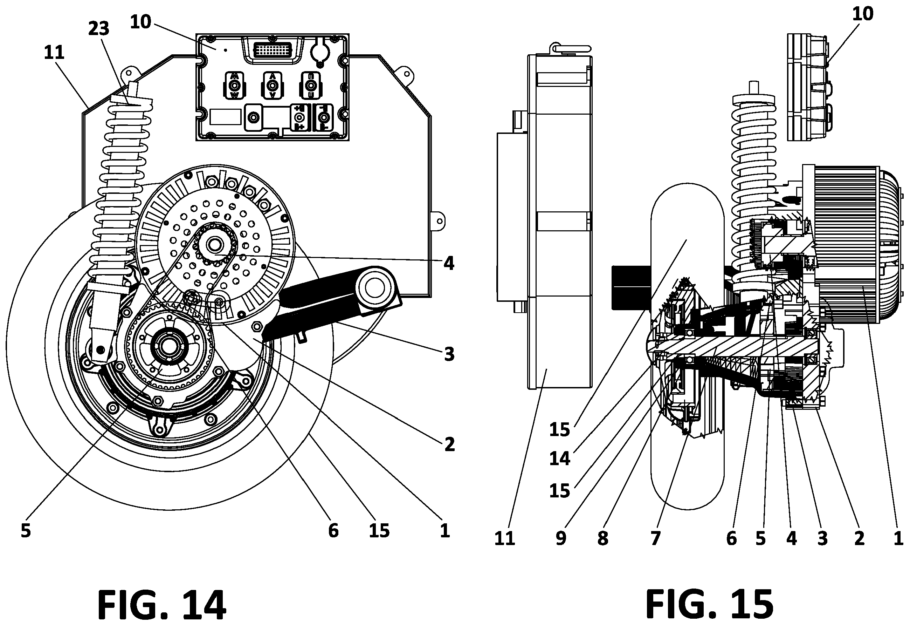

According to a second preferred embodiment, shown in figures 14 and 15, in the case of dispensing with the original manual gearbox and obtaining an electric motorbike with belt or chain drive, the clutch, the primary shaft, the sprockets, the secondary shafts for the gearbox, as well as the outer casing of the original motorbike (not shown in the figures) will be eliminated. In this case, the new components shall be arranged on the frame, the electric motor (1) can be placed in the area where the magnetic plate was located by matching the shaft of the electric motor (1) with the shaft of the crankshaft that has been removed, see figure 1.

The gearbox elements are replaced by toothed pulleys/pinions, where on the shaft of the electric motor (1) there is a primary toothed pulley (4) (or pinion) constituting the primary shaft and a secondary pulley (5) where a shaft is mounted, which may be supported by two bearings (8) or bearings and in turn this shaft is connected by a spline or keyway in the rear rim (13). The movement from the primary pulley (4) to the secondary pulley (5) is transmitted by means of a belt (6) or chain, shown in figure 14, which may or may not require a tensioner. The bearings (8) can be fixed by means of locking rings (9), shown in figure 15, or by set screws to the inner casing (2) and the outer casing (3). The inner casing (2) can either remain original or be redesigned by simplifying it. In this case, the entire transmission is concealed by the inner housing (2) and outer casing (3).

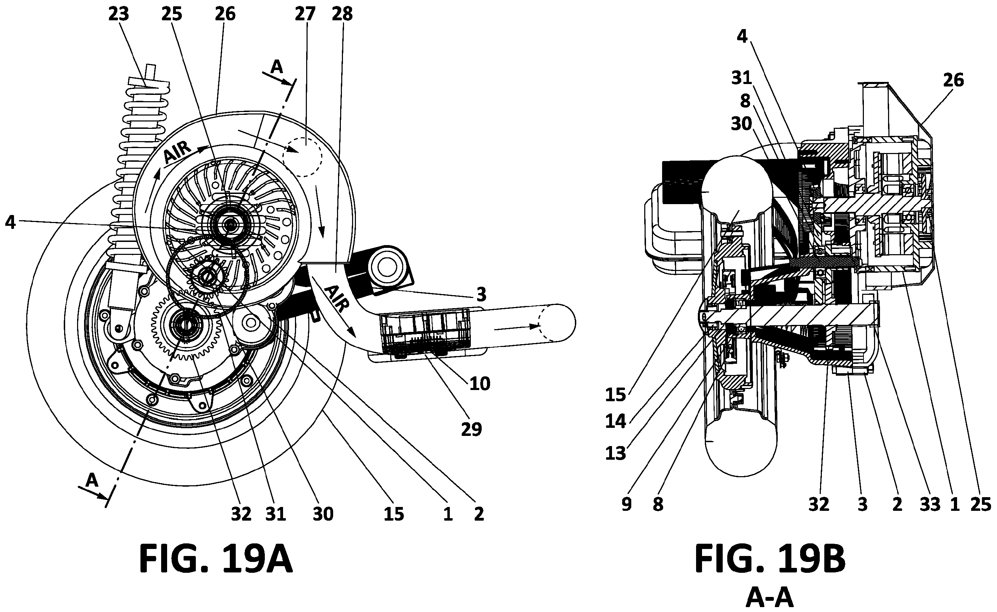

On the other hand, according to a third preferred embodiment, shown in figures 19A 19B, in the case of wishing to dispense with the manual gearbox and obtain greater reliability in the transmission elements, as well as greater savings in components compared to the manual transmission, the solution proposed here is to add a transmission with a reduction gear comprising three shafts:
The first shaft comprises a primary gear (4) connected to the electric motor (1).

The second shaft comprises an intermediate shaft (30) connected to the outer casing (2) and the inner casing (3) and a double gear (31), shown in figure 19A, which can rotate because it is connected by bearings to the intermediate shaft (30). The double gear (31) is capable of reducing the rotational speed of the primary gear (4).

The third shaft comprises an end gear (32) attached to the secondary shaft (7). The secondary shaft (7) can rotate because it is connected by bearings (8) and/or bearing (33) to the outer casing (2) and the inner casing (3) and is connected to the rear wheel (15) with the wheel (15) being cantilevered. The final gear (32) is able to reduce the rotational speed of the double gear (31) and in turn is attached to the axle (6) and the rear wheel (15).

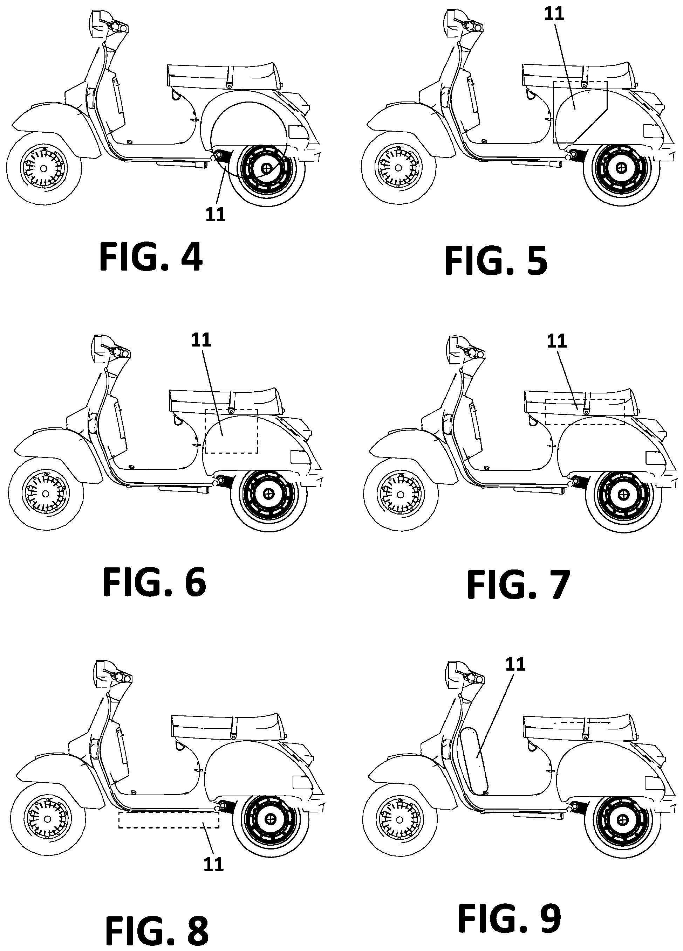

With regard to the energy storage system (11), the battery is integrated in one of the available spaces of the motorbike chassis (17), see figures 3 to 13 and 25. Thus, for example, the battery can be housed in the central recess of the motorbike, eliminating the fuel tank, as shown in figures 5 to 7; or the battery can be located in the left hull (21) where the spare wheel is stored, as shown in figures 3, 4 and 12. However, it is envisaged that the battery may be housed in other available recesses of the motorbike, such as the area above and below the central area of the chassis (17), as shown in Figures 8 and 9.

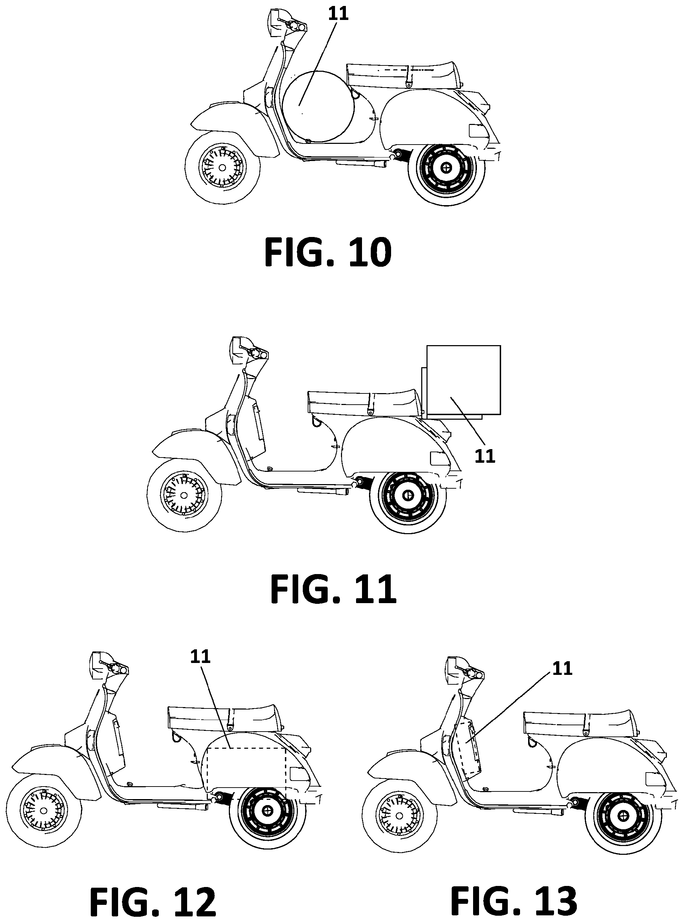

Specifically, the batteries can be shaped to best fit the gap or even evoke the original shapes of the spare wheel, as shown in figures 4, 9 and 10; or in one of the two fairings (21, 22) as shown in figure 3; in the exhaust system, see figure 11; in the seat itself (19) of the motorbike, see figure 7; or even in the storage compartment (20), as shown in figure 13 to achieve an image faithful to the original design. Any combination of batteries is covered by the present invention.

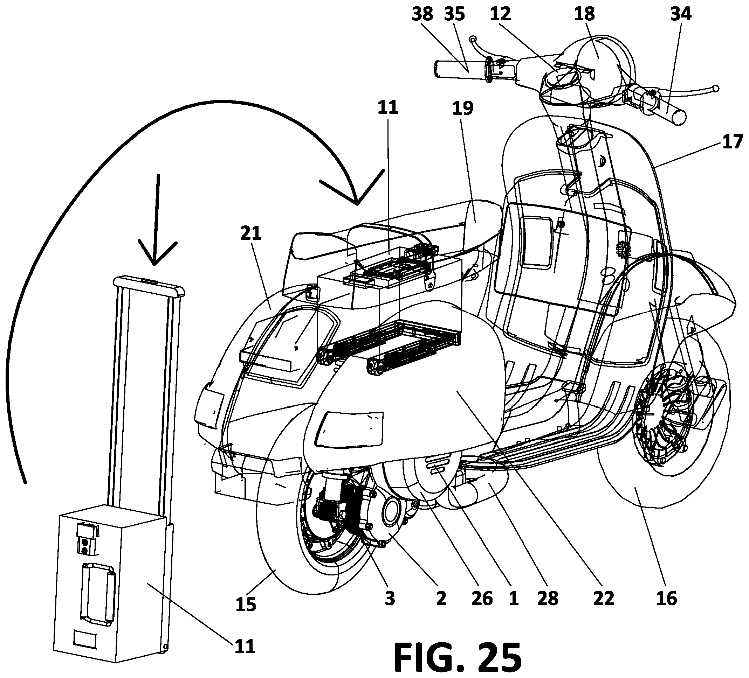

In the embodiment shown in Figure 25, the energy storage system comprises a wheeled cover with a folding handle in the recess where the petrol tank of the original motorbike was located. This facilitates the electric charging operation of the battery for people who have to transport the battery to their home, given its removable nature, in a convenient and simple way.

The depiction of the battery and the defined battery cavities, see figures 3 to 13 and 25, can also be another type of energy source or energy generation, such as a hydrogen fuel cell, and some of the defined volumes can be the hydrogen fuel cell itself or hydrogen tanks to supply the hydrogen fuel cell.

As the engine controller (10) is a small element, it can be located anywhere on the motorbike, as shown in figures 1 and 14.

Therefore, the present invention optimises energy and favours cooling by means of a propeller (25) for cooling attached to the shaft of the electric motor (10). The electric motor (10) will be covered by a volute-shaped casing (26) that will allow the air flow inside it generated by the rotation of the propeller (25) and will cool the motor (10) by conducting the air flow through the volute and around the motor. By means of the pipe (27) and the pipe (28) air will be conducted from the volute casing (26) to the energy storage system (11) and to the engine controller (10), which will be located inside a protected casing (29) on the underside of the motorbike where the exhaust system was previously located, and thus with the flow of air generated by the movement of the running engine (1) it will cool the engine itself and both systems. In addition, the housing (29) has a triple function: on the one hand, to cool the engine controller (10) as mentioned above, on the other hand, to protect it from external agents and finally to act as a Faraday cage for the engine controller (10) so that it does not emit electromagnetic fields that affect other electronic devices.

The motorbike integrates in the handlebar (18), an electronic throttle grip (34), a throttle grip power selector (35) or for manual gearbox, a throttle grip gear selector (38) with three forward and reverse gears, an odometer (12) with speedometer, voltmeter, and ammeter, see figures 1 to 3. The display is connected to the battery and to the engine controller (10).

The throttle grip (34) is integrated into the handlebars (18) of the motorbike, while an electronic potentiometer (36) is connected to the throttle grip (34) and the engine controller (10).

The power selector on the handle (35) may be connected by means of a mechanical cable and sheath and by turning the power selector on the handle (35) it may operate the mechanical cable and this in turn moves an electronic switch (37) which is connected to the engine controller (10) allowing the power map of the engine controller (10) to be changed with three different power ratings.

For the manual gearbox, the grip gear selector device (38) can actuate an electronic switch (37) which will be connected to the engine controller (10) allowing to change the power map of the engine controller with three different power ratings and in turn the grip gear selector device (38) can actuate the electronic switch (37) which will act on two electromechanical devices.

The electromechanical clutch device (47) actuates the clutch (39) leaving the primary gear (4) free allowing the gear change while the electromechanical gear change device (48) will actuate the plunger (46) synchronously with the clutch (39) and move the crosshead (45) until it is positioned in the gear corresponding to the selected gear.

The systems described above may be connected by electrical wiring, and may also be wireless or Bluetooth in the case of the digital display (12). The motorbike may also have a Bluetooth connection to the smartphone and a computer connection port for customising the parameters of the electronic system of the electric motor (1).

The industrial application of the present invention ranges from the conception and redesign of an existing motorbike of this type for mass production, to the design of separate components for subsequent manufacture and sale in kits for the electric conversion of this type of motorbike.

## Claims

1. Conversion device for converting a two or three-wheeled vehicle with a petrol engine to an electric motor, wherein said conversion device comprises:
- an electric motor (1);
- an engine controller (10);
- an energy storage system (11) capable of powering the electric motor (1), and having a size and dimensions adapted to one or more recesses of the original vehicle fairing; and
- a transmission system, which conducts the power to the rear wheel (15) of the vehicle;
wherein the conversion device is **characterised in that it** further comprises:
- a propeller (25) for cooling the electric motor (1);
- a first spiral-shaped housing (26) covering the electric motor (1) with an external opening for the suction of external air and the flow of air generated by the rotation of the propeller (25) around the electric motor (1) cooling it;
- a first pipe (27) and a second pipe (28), arranged one after the other, for conducting air from the first spiral-shaped housing (26) to the energy storage system (11) and the engine controller (10) for cooling;
- a second casing (29), which connects to the second pipe (28), wherein said second casing (29) encloses and protects the engine controller (10), preventing electromagnetic disturbances generated by the engine controller (10) and wherein the air generated by the rotation of the propeller (25) passes through the second pipe (28) and is expelled through the second casing (29).

2. Conversion device according to claim 1, **characterised in that**, in case of keeping the manual gearbox of the original petrol engine vehicle, the transmission system comprises three shafts:
- a first shaft comprising a clutch (39) connected to a primary gear (4) and to the electric motor (1);
- a second shaft comprising an intermediate shaft (30) connected to the outer casing (2) and the inner casing (3), and a four fixed gear rim (40) which can rotate because it is connected by bearings to the intermediate shaft (30); and
- a third shaft comprising a first gear (42), a second gear (43), a third gear (44), a gear shaft (41) which can rotate freely relative to the gears (42, 43, 44), a crosshead (45) attached to the gear shaft (41), and a plunger (46) attached to the crosshead (45).

3. Conversion device according to claim 2, **characterised in that** it additionally comprises:
- a grip gear selector (38) with at least three forward gears and one reverse gear, the grip gear selector (38) being integrated into the handlebar (18) of the vehicle, and
- an electronic switch (37) connected to the engine controller (10), such that the electronic switch (37) is operable by the gear selector device on the handle (38), allowing the power map of the engine controller (10) to be changed with three different power ratings.

4. Conversion device according to claim 2, **characterised in that** the first shaft of the drive system additionally comprises:
- an electromechanical clutch device (47) attached to the clutch (39), and configured to move the clutch mechanism to engage the primary gear (4) with the clutch (39) and the shaft of the electric motor (1); and
- an electromechanical gear change device (48).

5. Conversion device according to claims 3 and 4, **characterised in that** the electromechanical clutch device (47) is configured to actuate the clutch (39), freeing the primary gear (4) and allowing gear shifting; while the electromechanical device of the gear shift (48) is configured to actuate the plunger (46) synchronously with the clutch (39) and move the crosshead (45) until it is positioned in the gear corresponding to the selected gear by fixing and making the gear shift shaft (41) solidly connected to the first gear (42) if position 1 is selected in the gear selector device on the grip (38); with the second gear (43) if position 2 is selected on the gear selector on the grip (38); with the third gear (44) if position 3 is selected on the gear selector on the grip (38); and shall reverse the direction of rotation of the engine if the reverse gear position is selected on the gear selector on the grip (38).

6. Conversion device according to claim 1, **characterised in that** it additionally comprises:
- a grip power selector (35) with at least three forward gears and one reverse gear, the grip power selector (38) being integrated into the handlebar (18) of the vehicle, and
- an electronic switch (37) connected to the engine controller (10), wherein said electronic switch (37) is connected to the power selector device in the handle (35) by means of a mechanical cable and sheath, such that turning the power selector device in the handle (35) actuates the mechanical cable, which in turn moves the electronic switch (37), allowing the power map of the engine controller (10) to be changed with three different power ratings.

7. Conversion device according to claim 1, **characterised in that** the electric motor (1) is aligned where the longitudinal axis of the crankshaft of the original petrol engine vehicle was originally located.

8. Conversion device according to claim 1, **characterised in that** the energy storage system (11) comprises at least one battery with a shape and dimensions such that it can be located in any of the available spaces of the vehicle chassis.

9. Conversion device according to claim 1, **characterised in that** the energy storage system (11) comprises at least one hydrogen fuel cell and one hydrogen tank, wherein both the hydrogen fuel cell and the hydrogen tank have shapes and dimensions such that they can be located in any of the available spaces of the vehicle chassis.

10. Conversion device according to claim 1, **characterised in that** it additionally comprises a cover in any of the following forms:
- shape of the original vehicle's fuel tank;
- shape of the vehicle's spare wheel;
- shape of the rear storage boot;
- shape of the fairing (21, 22) of the original vehicle;
such that the energy storage system (11) is of such size and dimensions that it can be concealed under the cover.

11. Conversion device according to claim 2, **characterised in that** in the second shaft, the largest crown of the four fixed gears (40) has a damping mechanism, in contact with the primary gear (4) and configured to reduce the rotational speed of the primary gear (4) due to its gear teeth being in contact.

12. Conversion device according to claim 2, **characterised in that** the third shaft of the transmission system additionally comprises an electromechanical device of the gear change attached to the plunger (46) and capable of moving the plunger and the crosshead until it coincides with one of the 3 gears, joining the 1st gear (42) or the 2nd gear (43) or the 3rd gear (44) to the gear shaft (41).

13. Conversion device according to claim 2, **characterised in that** in the third shaft, the gear shaft (41) is connected by means of bearings (8) and/or bearing (33) to the outer casing (2) and the inner casing (3) and is connected to the rear wheel (15), the rear wheel (15) being cantilevered.

14. Conversion device according to claim 2, **characterised in that** on the third shaft, the first gear (42), the second gear (43) and the third gear (44) have their gear teeth in contact, in order to allow the reduction of the rotational speed of the fixed four-gear crown wheel (40).

15. Vehicle comprising the conversion device described in any one of claims 1 to 14.

## Patentansprüche

1. Umwandlungsvorrichtung zum Umwandeln eines zwei- oder dreirädrigen Fahrzeugs mit einem Benzinmotor in eines mit einem Elektromotor, wobei die Umwandlungsvorrichtung umfasst:
- einen Elektromotor (1);
- eine Motorsteuerung (10);
- ein Energiespeichersystem (11), das in der Lage ist, den Elektromotor (1) anzutreiben, und das eine Größe und Abmessungen aufweist, die an eine oder mehrere Aussparungen der ursprünglichen Fahrzeugverkleidung angepasst sind;
und
- ein Getriebesystem, das die Leistung zu dem Hinterrad (15) des Fahrzeugs leitet;
wobei die Umwandlungsvorrichtung **dadurch gekennzeichnet ist, dass** sie ferner umfasst:
- einen Propeller (25) zum Kühlen des Elektromotors (1);
- ein erstes, den Elektromotor (1) bedeckendes, spiralförmiges Gehäuse (26) mit einer äußeren Öffnung für das Ansaugen von Außenluft und den Luftstrom, der durch die Drehung des Propellers (25) um den Elektromotor (1) erzeugt wird und ihn kühlt;
- ein erstes Rohr (27) und ein zweites Rohr (28), die nacheinander angeordnet sind, um Luft von dem ersten spiralförmigen Gehäuse (26) zu dem Energiespeichersystem (11) und der Motorsteuerung (10) zum Kühlen zu leiten;
- ein zweites Gehäuse (29), das mit dem zweiten Rohr (28) verbunden ist, wobei das zweite Gehäuse (29) die Motorsteuerung (10) umschließt und schützt, wodurch elektromagnetische Störungen verhindert werden, die durch die Motorsteuerung (10) erzeugt werden, und wobei die Luft, die durch die Drehung des Propellers (25) erzeugt wird, durch das zweite Rohr (28) strömt und durch das zweite Gehäuse (29) ausgestoßen wird.

2. Umwandlungsvorrichtung nach Anspruch 1, **dadurch gekennzeichnet, dass** im Fall des Beibehaltens des Handschaltgetriebes des ursprünglichen Benzinmotorfahrzeugs das Getriebesystem drei Wellen umfasst:
- eine erste Welle, die eine Kupplung (39) umfasst, die mit einem primären Zahnrad (4) und mit dem Elektromotor (1) verbunden ist;
- eine zweite Welle, die eine Zwischenwelle (30) umfasst, die mit dem äußeren Gehäuse (2) und dem inneren Gehäuse (3) verbunden ist, und einen Zahnkranz (40) für vier festen Gänge, der sich drehen kann, da er durch Lager mit der Zwischenwelle (30) verbunden ist; und
- eine dritte Welle, die ein erstes Zahnrad (42), ein zweites Zahnrad (43), ein drittes Zahnrad (44), eine Gangwelle (41), die sich in Bezug auf die Zahnräder (42, 43, 44) frei drehen kann, einen Kreuzkopf (45), der an der Gangwelle (41) befestigt ist, und einen Stößel (46), der an dem Kreuzkopf (45) befestigt ist, umfasst.

3. Umwandlungsvorrichtung nach Anspruch 2, **dadurch gekennzeichnet, dass** sie zusätzlich umfasst:
- einen Griffgangwähler (38) mit mindestens drei Vorwärtsgängen und einem Rückwärtsgang, wobei der Griffgangwähler (38) in die Lenkstange (18) des Fahrzeugs integriert ist, und
- einen elektronischen Schalter (37), der mit der Motorsteuerung (10) verbunden ist, so dass der elektronische Schalter (37) durch die Gangwählvorrichtung an dem Griff (38) betätigt werden kann, wodurch ermöglicht wird, das Leistungskennfeld der Motorsteuerung (10) mit drei verschiedenen Nennleistungen zu ändern.

4. Umwandlungsvorrichtung nach Anspruch 2, **dadurch gekennzeichnet, dass** die erste Welle des Antriebssystems zusätzlich umfasst:
- eine elektromechanische Kupplungsvorrichtung (47), die an der Kupplung (39) angebracht ist und konfiguriert ist, um den Kupplungsmechanismus zu bewegen, um das primäre Zahnrad (4) mit der Kupplung (39) und der Welle des Elektromotors (1) in Eingriff zu bringen; und
- eine elektromechanische Gangwechselvorrichtung (48).

5. Umwandlungsvorrichtung nach den Ansprüchen 3 und 4, **dadurch gekennzeichnet, dass** die elektromechanische Kupplungsvorrichtung (47) konfiguriert ist, um die Kupplung (39) zu betätigen, wodurch das primäre Zahnrad (4) freigegeben und ein Gangwechsel ermöglicht wird; während die elektromechanische Vorrichtung des Gangwechslers (48) konfiguriert ist, um den Stößel (46) synchron mit der Kupplung (39) zu betätigen und den Kreuzkopf (45) zu bewegen, bis er in dem Zahnrad positioniert ist, das dem ausgewählten Gang entspricht, indem die Gangwechselwelle (41) fixiert und fest mit dem ersten Zahnrad (42) verbunden wird, wenn Position 1 in der Gangwählvorrichtung an dem Griff (38) ausgewählt ist; mit dem zweiten Zahnrad (43), wenn Position 2 an dem Gangwähler an dem Griff (38) ausgewählt ist; mit dem dritten Zahnrad (44), wenn Position 3 an dem Gangwähler an dem Griff (38) ausgewählt ist; und die Drehrichtung des Motors umzukehren, wenn die Rückwärtsgangposition an dem Gangwähler an dem Griff (38) ausgewählt ist.

6. Umwandlungsvorrichtung nach Anspruch 1, **dadurch gekennzeichnet, dass** sie zusätzlich umfasst:
- einen Griffleistungswähler (35) mit mindestens drei Vorwärtsgängen und einem Rückwärtsgang, wobei der Griffleistungswähler (38) in die Lenkstange (18) des Fahrzeugs integriert ist, und
- einen elektronischen Schalter (37), der mit der Motorsteuerung (10) verbunden ist, wobei der elektronische Schalter (37) mit der Leistungswählvorrichtung in dem Griff (35) mittels eines mechanischen Kabels und einem Mantel verbunden ist, so dass das Drehen der Leistungswählvorrichtung in dem Griff (35) das mechanische Kabel betätigt, das wiederum den elektronischen Schalter (37) bewegt, wodurch ermöglicht wird, das Leistungskennfeld der Motorsteuerung (10) mit drei verschiedenen Nennleistungen zu ändern.

7. Umwandlungsvorrichtung nach Anspruch 1, **dadurch gekennzeichnet, dass** der Elektromotor (1) dort ausgerichtet ist, wo sich die Längsachse der Kurbelwelle des ursprünglichen Benzinmotorfahrzeugs ursprünglich befand.

8. Umwandlungsvorrichtung nach Anspruch 1, **dadurch gekennzeichnet, dass** das Energiespeichersystem (11) mindestens eine Batterie mit einer Form und Abmessungen umfasst, so dass sie sich in jedem der verfügbaren Räume des Fahrzeugchassis befinden kann.

9. Umwandlungsvorrichtung nach Anspruch 1, **dadurch gekennzeichnet, dass** das Energiespeichersystem (11) mindestens eine Wasserstoffbrennstoffzelle und einen Wasserstofftank umfasst, wobei sowohl die Wasserstoffbrennstoffzelle als auch der Wasserstofftank Formen und Abmessungen aufweisen, so dass sie sich in jedem der verfügbaren Räume des Fahrzeugchassis befinden können.

10. Umwandlungsvorrichtung nach Anspruch 1, **dadurch gekennzeichnet, dass** sie zusätzlich eine Abdeckung in einer der folgenden Formen umfasst:
- Form des Kraftstofftanks des ursprünglichen Fahrzeugs;
- Form des Ersatzrads des Fahrzeugs;
- Form des hinteren Kofferraums;
- Form der Verkleidung (21, 22) des ursprünglichen Fahrzeugs; derart, dass das Energiespeichersystem (11) eine solche Größe und Abmessungen aufweist, dass es unter der Abdeckung verborgen werden kann.

11. Umwandlungsvorrichtung nach Anspruch 2, **dadurch gekennzeichnet, dass** in der zweiten Welle der größte Kranz der vier festen Zahnräder (40) einen Dämpfungsmechanismus aufweist, der mit dem primären Zahnrad (4) in Kontakt steht und konfiguriert ist, um die Drehgeschwindigkeit des primären Zahnrads (4) aufgrund dessen, dass seine Zahnradzähne in Kontakt stehen, zu verringern.

12. Umwandlungsvorrichtung nach Anspruch 2, **dadurch gekennzeichnet, dass** die dritte Welle des Getriebesystems zusätzlich eine elektromechanische Gangwechselvorrichtung umfasst, die an dem Stößel (46) angebracht ist und in der Lage ist, den Stößel und den Kreuzkopf zu bewegen, bis er mit einem der 3 Zahnräder zusammenfällt, wobei das 1. Zahnrad (42) oder das 2. Zahnrad (43) oder das 3. Zahnrad (44) mit der Gangwelle (41) verbunden wird.

13. Umwandlungsvorrichtung nach Anspruch 2, **dadurch gekennzeichnet, dass** in der dritten Welle die Gangwelle (41) mittels Lagern (8) und/oder Lagern (33) mit dem äußeren Gehäuse (2) und dem inneren Gehäuse (3) verbunden ist und mit dem Hinterrad (15) verbunden ist, wobei das Hinterrad (15) einseitig gelagert ist.

14. Umwandlungsvorrichtung nach Anspruch 2, **dadurch gekennzeichnet, dass** auf der dritten Welle die Zahnradzähne des ersten Zahnrads (42), des zweiten Zahnrads (43) und des dritten Zahnrads (44) Kontakt haben, um die Verringerung der Drehgeschwindigkeit des festen Viergang-Kranzrads (40) zu ermöglichen.

15. Fahrzeug, umfassend die Umwandlungsvorrichtung nach einem der Ansprüche 1 bis 14.

## Revendications

1. Dispositif de conversion pour convertir un véhicule à deux ou trois roues équipé d'un moteur à essence en un moteur électrique, dans lequel ledit dispositif de conversion comprend :
- un moteur électrique (1) ;
- un contrôleur de moteur (10) ;
- un système de stockage d'énergie (11) capable d'alimenter le moteur électrique (1) et dont la taille et les dimensions sont adaptées à un ou plusieurs renfoncements du carénage d'origine du véhicule ; et
- un système de transmission, qui transmet la puissance à la roue arrière (15) du véhicule ;
dans lequel le dispositif de conversion est **caractérisé en ce qu'**il comprend en outre :
- une hélice (25) pour refroidir le moteur électrique (1) ;
- un premier boîtier en forme de spirale (26) recouvrant le moteur électrique (1) avec une ouverture externe pour l'aspiration d'air extérieur et le flux d'air généré par la rotation de l'hélice (25) autour du moteur électrique (1), le refroidissant ;
- un premier tuyau (27) et un deuxième tuyau (28), disposés l'un après l'autre, pour conduire l'air du premier boîtier en forme de spirale (26) vers le système de stockage d'énergie (11) et le contrôleur de moteur (10) pour le refroidissement ;
- un deuxième boîtier (29), qui se raccorde au deuxième tuyau (28), dans lequel ledit deuxième boîtier (29) renferme et protège le contrôleur de moteur (10), empêchant les perturbations électromagnétiques générées par le contrôleur de moteur (10) et dans lequel l'air généré par la rotation de l'hélice (25) passe à travers le deuxième tuyau (28) et est expulsé à travers le deuxième boîtier (29).

2. Dispositif de conversion selon la revendication 1, **caractérisé en ce que**, dans le cas où la boîte de vitesses manuelle du véhicule à moteur à essence d'origine est conservée, le système de transmission comprend trois arbres :
- un premier arbre comprenant un embrayage (39) relié à un engrenage primaire (4) et au moteur électrique (1) ;
- un deuxième arbre comprenant un arbre intermédiaire (30) relié au boîtier extérieur (2) et au boîtier intérieur (3), et une couronne à quatre engrenages fixes (40) qui peut tourner car elle est reliée par des roulements à l'arbre intermédiaire (30) ; et
- un troisième arbre comprenant un premier engrenage (42), un deuxième engrenage (43), un troisième engrenage (44), un arbre d'engrenage (41) qui peut tourner librement par rapport aux engrenages (42, 43, 44), une traverse (45) fixée à l'arbre d'engrenage (41) et un piston (46) fixé à la traverse (45).

3. Dispositif de conversion selon la revendication 2, **caractérisé en ce qu'**il comprend en outre :
- un sélecteur de vitesse à poignée (38) avec au moins trois vitesses avant et une vitesse arrière, le sélecteur de vitesse à poignée (38) étant intégré dans le guidon (18) du véhicule, et
- un commutateur électronique (37) connecté au contrôleur de moteur (10), de telle sorte que le commutateur électronique (37) puisse être actionné par le dispositif de sélection de vitesse situé sur la poignée (38), permettant de modifier la cartographie de puissance du contrôleur de moteur (10) avec trois puissances nominales différentes.

4. Dispositif de conversion selon la revendication 2, **caractérisé en ce que** le premier arbre du système d'entraînement comprend en outre :
- un dispositif d'embrayage électromécanique (47) fixé à l'embrayage (39) et configuré pour déplacer le mécanisme d'embrayage afin d'engager l'engrenage primaire (4) avec l'embrayage (39) et l'arbre du moteur électrique (1) ; et
- un dispositif électromécanique de changement de vitesse (48).

5. Dispositif de conversion selon les revendications 3 et 4, **caractérisé en ce que** le dispositif d'embrayage électromécanique (47) est configuré pour actionner l'embrayage (39), libérant l'engrenage primaire (4) et permettant le changement de vitesse ; tandis que le dispositif électromécanique de changement de vitesse (48) est configuré pour actionner le piston (46) de manière synchrone avec l'embrayage (39) et déplacer la traverse (45) jusqu'à ce qu'elle soit positionnée dans l'engrenage correspondant à l'engrenage sélectionné en fixant et en reliant solidement l'arbre de changement de vitesse (41) au premier engrenage (42) si une position 1 est sélectionnée dans le dispositif de sélection de vitesse sur la poignée (38) ; au deuxième engrenage (43) si une position 2 est sélectionnée dans le dispositif de sélection de vitesse situé sur la poignée (38) ; au troisième engrenage (44) si la position 3 est sélectionnée dans le dispositif de sélection de vitesse situé sur la poignée (38) ; et doit inverser le sens de rotation du moteur si la position de marche arrière est sélectionnée dans le dispositif de sélection de vitesse situé sur la poignée (38).

6. Dispositif de conversion selon la revendication 1, **caractérisé en ce qu'**il comprend en outre :
- un sélecteur de puissance à poignée (35) avec au moins trois vitesses avant et une vitesse arrière, le sélecteur de puissance de poignée (38) étant intégré dans le guidon (18) du véhicule, et
- un commutateur électronique (37) connecté au contrôleur du moteur (10), dans lequel ledit commutateur électronique (37) est connecté au dispositif de sélection de puissance dans la poignée (35) au moyen d'un câble mécanique et d'une gaine, de telle sorte que la rotation du dispositif de sélection de puissance dans la poignée (35) actionne le câble mécanique, qui à son tour déplace le commutateur électronique (37), permettant ainsi de modifier la cartographie de puissance du contrôleur de moteur (10) avec trois puissances nominales différentes.

7. Dispositif de conversion selon la revendication 1, **caractérisé en ce que** le moteur électrique (1) est aligné à l'endroit où se trouvait à l'origine l'axe longitudinal du vilebrequin du véhicule à moteur à essence d'origine.

8. Dispositif de conversion selon la revendication 1, **caractérisé en ce que** le système de stockage d'énergie (11) comprend au moins une batterie dont la forme et les dimensions sont telles qu'elle peut être placée dans n'importe quel espace disponible du châssis du véhicule.

9. Dispositif de conversion selon la revendication 1, **caractérisé en ce que** le système de stockage d'énergie (11) comprend au moins une pile à combustible à hydrogène et un réservoir d'hydrogène, dans lequel la pile à combustible à hydrogène et le réservoir d'hydrogène ont tous deux des formes et des dimensions telles qu'ils peuvent être placés dans n'importe quel espace disponible du châssis du véhicule.

10. Dispositif de conversion selon la revendication 1, **caractérisé en ce qu'**il comprend en outre un couvercle sous l'une quelconque des formes suivantes :
- forme du réservoir de carburant d'origine du véhicule ;
- forme de la roue de secours du véhicule ;
- forme du coffre de rangement arrière ;
- forme du carénage (21, 22) du véhicule d'origine ;
de telle sorte que le système de stockage d'énergie (11) a une taille et des dimensions telles qu'il peut être dissimulé sous le capot.

11. Dispositif de conversion selon la revendication 2, **caractérisé en ce que**, dans le deuxième arbre, la plus grande couronne des quatre engrenages fixes (40) comporte un mécanisme d'amortissement, en contact avec l'engrenage primaire (4) et configuré pour réduire la vitesse de rotation de l'engrenage primaire (4) en raison du contact de ses dents d'engrenage.

12. Dispositif de conversion selon la revendication 2, **caractérisé en ce que** le troisième arbre du système de transmission comprend en outre un dispositif électromécanique du changement d'engrenage fixé au piston (46) et capable de déplacer le piston et la traverse jusqu'à ce qu'elle coïncide avec l'un des 3 engrenages, reliant le 1er engrenage (42) ou le 2ème engrenage (43) ou le 3ème engrenage (44) à l'arbre de transmission (41).

13. Dispositif de conversion selon la revendication 2, **caractérisé en ce que**, dans le troisième arbre, l'arbre de transmission (41) est relié au moyen de paliers (8) et/ou d'un palier (33) au boîtier extérieur (2) et au boîtier intérieur (3) et est relié à la roue arrière (15), la roue arrière (15) étant en porte-à-faux.

14. Dispositif de conversion selon la revendication 2, **caractérisé en ce que**, sur le troisième arbre, le premier engrenage (42), le deuxième engrenage (43) et le troisième engrenage (44) ont leurs dents d'engrenage en contact, afin de permettre la réduction de la vitesse de rotation de la couronne à quatre engrenages fixes (40).

15. Véhicule comprenant le dispositif de conversion décrit dans l'une quelconque des revendications 1 à 14.
